# EUROPEAN PATENT APPLICATION

(11) **EP 4 791 007 A1**
(43) Date of publication of application: **12.08.2026**
(21) Application number: 24874076.3
(22) Date of filing: 29.09.2024
(51) Int. Cl.: H04N 21/431

(54) **LIVE STREAMING INTERACTION METHOD AND APPARATUS, AND DEVICE AND STORAGE MEDIUM**

(30) Priority: 07.10.2023 CN 202311287696
(71) Applicant: Beijing Zitiao Network Technology Co., Ltd., Beijing 100190 (CN)
(72) Inventor: FAN, Teng, Beijing 100028 (CN)
(74) Representative: Grünecker Patent- und Rechtsanwälte PartG mbB
(86) International application number: PCT/CN2024/122582
(87) International publication number: WO 2025/073259

(57) **Abstract**

Embodiments of the present disclosure provide a method, an apparatus, a device and a storage medium for live streaming interaction. In the method, respective identifications of a plurality of users are presented in a live stream interface according to a predetermined layout. The plurality of users participate in an interaction event in a live stream. Display modes of the respective identifications of the plurality of users are updated in the layout based on interaction information of the plurality of users in the interaction event. An identification of at least one user among the plurality of users is highlighted relative to identifications of other users among the plurality of users. In this way, the display style of the identification of the user may be dynamically changed based on the interaction of the user in the interaction event in the live stream, so as to indicate the interaction status of the user in the interaction event and improve the interaction experience.

## Description

This application claims the benefit of Chinese Patent Application No. 2023112876966, filed on October 7, 2023, entitled "Method, Apparatus, Device and Storage Medium for Live Streaming Interaction", the entire content of which is incorporated herein by reference.

### FIELD

Example embodiments of the present disclosure generally relate to the field of computers, and in particular, to a method, an apparatus, a device and a computer-readable storage medium for live streaming interaction.

### BACKGROUND

Currently, an increasing number of applications can provide live streaming functions. During a live streaming process, a streamer user can interact with audience users, which can attract more audience users, and improve the live streaming experience of the audience. For example, some live streams can create interaction events (e.g., games or co-streaming activities in the live stream, etc. ), and users can participate in the interaction events in the live stream. Users participating in the interaction events and other users watching the live stream can perform various types of interactions in the live stream.

### SUMMARY

In a first aspect of the present disclosure, a method for live streaming interaction is provided. The method includes: presenting respective identifications of a plurality of users in a live stream interface according to a predetermined layout, the plurality of users participating in an interaction event in a live stream; and updating display modes of the respective identifications of the plurality of users in the layout based on interaction information of the plurality of users in the interaction event, an identification of at least one user among the plurality of users being highlighted relative to identifications of other users among the plurality of users.

In a second aspect of the present disclosure, an apparatus for live streaming interaction is provided. The apparatus includes a presenting module configured to present respective identifications of a plurality of users in a live stream interface according to a predetermined layout, the plurality of users participating in an interaction event in a live stream; and a display updating module configured to update display modes of the respective identifications of the plurality of users in the layout based on interaction information of the plurality of users in the interaction event, an identification of at least one user among the plurality of users being highlighted relative to identifications of other users among the plurality of users.

In a third aspect of the present disclosure, an electronic device is provided. The electronic device includes at least one processing unit; and at least one memory coupled to the at least one processing unit and storing instructions executed by the at least one processing unit. The instructions, when executed by the at least one processing unit, cause the device to perform the method of the first aspect.

In a fourth aspect of the present disclosure, a computer-readable storage medium is provided. A computer program is stored on the medium, and when the computer program is executed by a processor, the method of the first aspect is implemented.

It should be understood that the content described in this section is not intended to limit the key features or important features of the embodiments of the present disclosure, nor is it used to limit the scope of the present disclosure. Other features of the present disclosure will become easily understood through the following description.

### BRIEF DESCRIPTION OF DRAWINGS

The above and other features, advantages, and aspects of various embodiments of the present disclosure will become more apparent when considered in conjunction with the drawings and the following detailed description. In the drawings, the same or similar reference numbers denote the same or similar elements, wherein:
FIG. 1 illustrates a schematic diagram of an example environment in which embodiments of the present disclosure can be implemented;
FIGS. 2A-2B illustrate examples of user identification layouts in a live stream interface according to some embodiments of the present disclosure;
FIGS. 3A-3E illustrate schematic diagrams of examples of live stream interfaces according to some embodiments of the present disclosure;
FIG. 4 illustrates a schematic diagram of an example of a user identification layout in a live stream interface according to some embodiments of the present disclosure;
FIG. 5 illustrates a flowchart of a process for live streaming interaction according to some embodiments of the present disclosure;
FIG. 6 illustrates a schematic structural block diagram of an apparatus for live streaming interaction according to some embodiments of the present disclosure; and
FIG. 7 illustrates an electronic device in which one or more embodiments of the present disclosure may be implemented.

### DETAILED DESCRIPTION

Embodiments of the present disclosure will be described in more detail below with reference to the drawings. Although certain embodiments of the present disclosure are shown in the drawings, it should be understood that the present disclosure may be implemented in various forms, and should not be construed as being limited to the embodiments set forth herein. On the contrary, these embodiments are provided for a more thorough and complete understanding of the present disclosure. It should be understood that the drawings and embodiments of the present disclosure are for illustrative purposes only and are not intended to limit the protection scope of the present disclosure.

In the description of the embodiments of the present disclosure, the terms "including" and the like should be understood as open-ended inclusion, that is, "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, performing a step "in response to A" does not mean that this step is performed immediately after "A", but may include one or more intermediate steps.

It may be understood that the data involved in the technical solution (including but not limited to the data itself, the obtaining or use of the data) should follow the requirements of the corresponding laws, regulations and related provisions.

It may be understood that before using the technical solutions disclosed in the embodiments of the present disclosure, the types, scopes of use, usage scenarios, etc. of personal information involved in the present disclosure should be notified to the user in an appropriate manner according to the relevant laws and regulations, and the authorization of the user should be obtained.

For example, in response to receiving an active request from a user, prompt information is sent to the user to explicitly prompt the user that the requested operation will require the acquisition and use of the personal information of the user, so that the user can autonomously select whether to provide personal information to software or hardware such as electronic devices, applications, servers or storage media that execute the operation of the technical solution of the present disclosure according to the prompt information.

As an optional but non-limiting implementation, in response to receiving the active request from the user, the manner of sending the prompt information to the user may be, for example, a pop-up window, in which the prompt information may be presented in a text form. In addition, the pop-up window may further carry a selection control for the user to select "agree" or "disagree" to provide personal information to the electronic device.

It may be understood that the above process of notifying and obtaining user authorization is merely illustrative, and does not constitute a limitation on implementations of the present disclosure, and other manners that meet related laws and regulations may also be applied to implementations of the present disclosure.

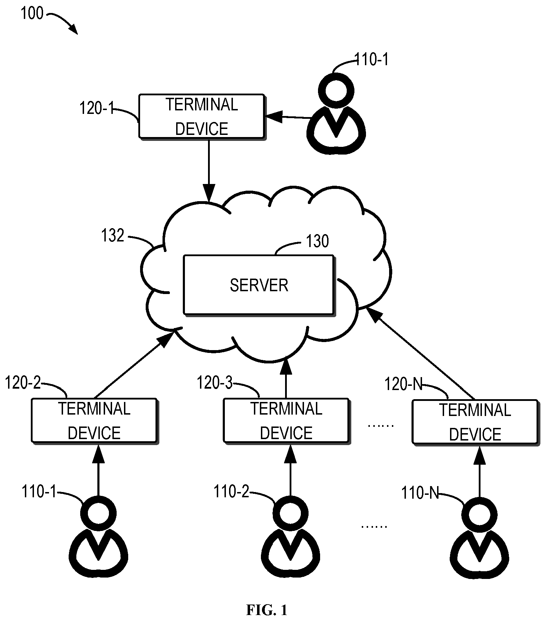

FIG. 1 illustrates a schematic diagram of an example environment 100 in which embodiments of the present disclosure can be implemented. In the environment 100, one or more users 110-1, 110-2, 110-3,..., 110-N may watch a live streaming and participate in an interaction in the live stream through their respective associated terminal devices 120-1, 120-2..., 120-N. For ease of discussion, the users 110-1, 110-2,..., 110-N may be collectively or individually referred to as user 110, and the terminal devices 120-1, 120-2,..., 120-N may be collectively or individually referred to as terminal device 120. Among all users 110, one or more users, such as the user 110-1, may establish a live stream and initiate a live streaming through the associated terminal device 120-1. In some scenarios, the user 110-1 may also be referred to as the streamer, broadcaster or manager of the live stream, for example. Other users 110 may also be referred to as the audience, viewers, watchers or participants of the live stream.

In some embodiments, the terminal devices 120 may be respectively installed with applications that can provide live streaming services, or may access websites that can provide live streaming services. The user 110 may operate the terminal device 120 to access a corresponding application or website. Correspondingly, the terminal device 120 may present the corresponding live streaming interface, which can for example provide the live streaming content of the live stream, such as audio live streaming content or video live streaming content.

In some embodiments, the terminal device 120 may further communicate with the server 110 through the network 132 to realize the provision of live streaming services. The server 110 may provide functions such as management, configuration, and maintenance of the applications or websites.

The terminal device 120 may be any type of mobile terminals, fixed terminals, or portable terminals, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio streaming receiver, an electronic book device, a gaming device, or any combination of the foregoing, including accessories and peripherals of these devices, or any combination thereof. In some embodiments, the terminal device 120 may also support any type of interface for a user (such as a "wearable" circuit, etc.). The server 110 may be various types of computing systems/servers capable of providing computing power, including, but not limited to, mainframes, edge computing nodes, computing devices in a cloud environment, and the like.

It should be understood that the structures and functions of the various elements in the environment 100 are described only for purpose of example, without suggesting any limitation to the scope of the present disclosure.

Generally, users (including streamers and audiences) in a live stream may participate in an interaction event in the live stream, such as a co-streaming activity, a game and the like between the users. After the interaction event is initiated, the identifications of the users participating in the interaction event, for example, user avatars, may be presented on the live stream interface. In conventional interaction solutions, the avatars of the users participating in the interaction event are usually arranged in a static layout and a fixed style. As the interaction event proceeds, the ranking status of the users' interaction information in the interaction event may be expressed by superimposing and displaying interface elements such as labels and numerical values on some user avatars. However, such a user identification displaying manner cannot significantly distinguish the ranking of different users' interaction information in the interaction event, and the static displaying method is difficult to demonstrate sustained attractiveness, making it hard to sustain the audience's attention to the interaction event.

According to embodiments of the present disclosure, an improved live stream interaction solution is provided. According to the interaction solution, respective identifications of a plurality of users are presented in a live stream interface according to a predetermined layout, and the plurality of users participate in an interaction event in the live stream. Display modes of the respective identifications of the plurality of users in the layout are updated based on interaction information of the plurality of users in the interaction event, where an identification of at least one user among the plurality of users is highlighted relative to identifications of other users among the plurality of users.

Such a method for live stream interaction may be implemented by an appropriate electronic device or a combination of electronic devices (e.g., the server 130, the terminal device 120 in FIG. 1, or a combination of one or more of these devices). For ease of description, the terminal device 120 is taken as an example below, and the process of the live stream interaction is described with reference to FIG. 1.

Referring to the example environment in FIG. 1, a live stream may include a plurality of users 110. An interaction event may be initiated in the live stream. In some embodiments, the interaction event in the live stream may be initiated by the streamer user of the live stream, or the streamer user may participate in the interaction event based on a request of a streamer user of another live stream. The plurality of users participating in the interaction event in the live stream may include the streamer user of the live stream, audience users of the live stream, and/or streamer user(s) of other live stream(s), and the like. In some embodiments, the plurality of users participating in the interaction event may include the initiator of the interaction event and the recipient of the interaction event. For example, the plurality of users participating in the interaction event may include the initiator of a co-streaming and the recipient of the co-streaming. Embodiments of the present disclosure do not limit the types of users participating in the interaction event in the live stream.

In some embodiments, the interaction event in the live stream may be any online activity, such as singing, dancing, storytelling, chatting, games, and the like, allowed in the live stream. Users participating in the interaction event may, for example, be allowed to enable a co-streaming permission or a video permission in the live stream for audio sharing and/or video sharing. In some embodiments, the streamer of the live stream may configure the interaction event in the live stream, for example, configure the type of the interaction event, the number of users participating in the interaction event, the interaction order of the users, an interaction restriction, an interaction duration, and the like.

According to the embodiments of the present disclosure, the display modes of the identifications of the users in the live stream interface may be dynamically changed based on the interaction information of the users in the interaction event in the live stream, so as to indicate the interaction status of the users in the interaction event and enable the identifications of certain users to be highlighted. Such a dynamic displaying method of the user identification may solve the problem of singularity and uniformity of identification displaying in the live streaming interaction event, promote the enthusiasm of the users in the live stream to participate in the interaction event, and improve the interaction experience of the users.

The dynamic displaying process of the user identification in the interaction event in the live stream will be described in detail below.

In the live stream interface, the respective identifications (also referred to as "user identifications") of the plurality of users are presented according to a predetermined layout, and the plurality of users participate in the interaction event in the live stream. In some embodiments, at the initial stage of the interaction event, the display modes of the respective identifications of the plurality of users in the layout are the same (consistent), for example, the display sizes of the identifications of the users may be the same. As the interaction event proceeds, the display modes of the respective identifications of the plurality of users in the layout are updated based on the interaction information of the plurality of users in the interaction event. Based on the interaction information, the identification of at least one user among the plurality of users is highlighted relative to identifications of other users among the plurality of users. In some embodiments, the identification of the at least one user with a higher ranking level of the interaction information among the plurality of users is highlighted.

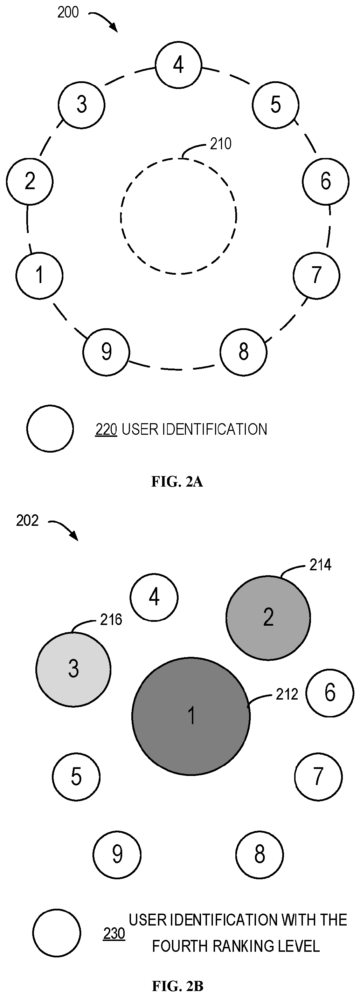

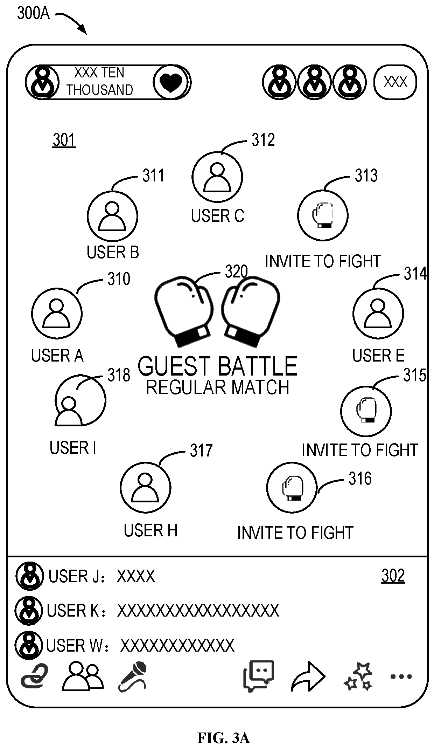

Example live stream interactions of some embodiments of the present disclosure will be described below with reference to FIG. 2A to FIG. 4. Such a live streaming interface may be presented to, for example, the streamer user of the live stream, the participating users of the interaction event, and/or the audience users of the live stream. It should be understood that the live stream interfaces shown in FIG. 3A to FIG. 4 are merely example interfaces. There may be various interface designs in practice, and each graphical elements in the interface may have different arrangements and different visual representations, where one or more elements may be omitted or replaced, and one or more other elements may also exist. Embodiments of the present disclosure are not limited in this respect.

In some embodiments, the predetermined layout includes an annular layout. At the initial stage of the interaction event, the respective identifications of the plurality of users are distributed on the annulus. In some embodiments, the identifications of the users on the annulus have the same display mode. In some embodiments, the display mode may be distinguished based on the display positions and/or the display styles of the user identifications. The display style refers to an appearance style of a user identification, such as a display size of the user identification, and an appearance attribute such as a color, an animation effect and the like. The highlighted user identification(s) may be easier to attract user attention in the display position, and/or be easier to attract user attention in the display style.

FIGS. 2A-2B illustrate general examples of user identification layouts in a live stream interface according to some embodiments of the present disclosure. FIG. 2A illustrates an example 200 of the distribution of respective identifications of the plurality of users on an annulus in the case of an annular layout, where 9 user identifications 220 are evenly distributed in the annular layout. In some embodiments, in addition to the annulus, the predetermined layout further includes a circle center surrounded by the annulus, such as the circle center 210 shown in FIG. 2A. At the initial stage of the interaction event, no user identification may be presented at the circle center 210.

In some embodiments, the user identification shown in the corresponding layout includes at least the avatar of the user, although other user identifications may be additionally or alternatively presented. In some embodiments, the display mode of the avatar of the user may be dynamically changed according to embodiments of the present disclosure. Moreover, the avatar of the user may be displayed together with the name of the user, the interaction information obtained by the user in the interaction event, other identifications of the user, and the like.

In some embodiments, the annulus includes a first predetermined number of positions for presenting the identifications. The first predetermined number of positions are evenly distributed over the annulus. The first predetermined number may be any predetermined number, or any configurable number, which may be configurable by the user initiating the interaction event, for example. If the number of users participating in the interaction event is less than the first predetermined number, a predetermined identification is prensented at a position on the annulus at which no identification will be presented during the interaction event. In some embodiments, if the predetermined layout further includes the circle center in the annulus, the predetermined identification may be presented at the position of the circle center at the initial stage of the interaction event. When the interaction event is initiated, all positions on the annulus are presented with the predetermined identifications, and as the users gradually join the interaction event, the predetermined identifications of the corresponding position are replaced by the identifications of the users.

In some embodiments, at the initial stage of the interaction event and in the following process, the user identifications presented in the layout may also be displayed with certain animation effects, for example, slight up, down, left and right movement at the corresponding position, so as to make the visual effect more attractive.

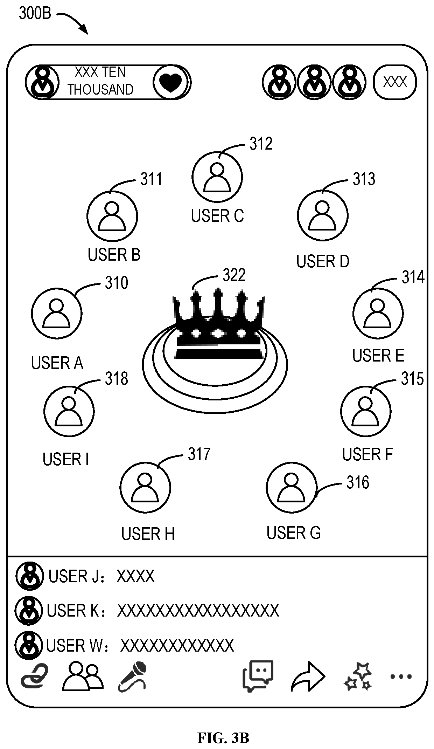

FIG. 3A illustrates an example live stream interface 300A in accordance with some embodiments of the present disclosure. The live stream interface 300A includes a live content area 301 and a comment area 302. The identifications of the plurality of users participating in the interaction event are presented in the live content area 301. In this example, it is assumed that there are 9 positions on the annulus, and identification 310 of user A, identification 311 of user B, identification 312 of user C, identification 314 of user E, identification 317 of user H, identification 318 of user I may be presented on an annular layout, and predetermined identifications are presented at positions 313, 315, 316 on the annulus where no user identification has been presented. In addition, a predetermined identification 320 is also presented at the center of the annulus. As the users gradually join the interaction event, as shown in the live stream interface 300B of FIG. 3B, positions corresponding to all users on the annulus are presented with the identifications of the corresponding users, and in the interaction event, the position of the circle center is presented with another predetermined identification 322. Certainly, if the number of all users participating in the interaction event is less than the number of the positions divided on the annulus, the predetermined identification may always be presented at the remaining positions during the interaction event.

In some embodiments, in addition to dividing the fixed number of positions on the annulus, the layout of the user identification on the annulus may be adjusted according to the number of users participating in the interaction event, so that the identifications of the users participating in the interaction event may always be evenly distributed on the annulus.

During the interaction event, corresponding interaction information may be collected for each user participating in the interaction event. Based on the interaction information of the plurality of users in the interaction event, the respective ranking levels corresponding to the plurality of users are determined. In some embodiments, the interaction information may be determined based on a predetermined interaction operation (for example, a like operation, a comment operation, a follow operation, a sharing operation, a virtual resource interaction operation, etc.) in the live stream for the plurality of users during the interaction event. The virtual resource may be determined by a corresponding application platform. Such interaction information may be quantified into a numerical form (referred to as a value of the interaction information), to facilitate the ranking of the interaction information. The value of the interaction information may be determined, for example, according to the interaction volume (the number of likes or the number of comments). For example, the larger the interaction volume (the larger the number of likes or the number of comments), the greater the value of the interaction information. When dividing the ranking levels, a certain number of ranking levels may be preconfigured. If the first ranking level is higher than the second ranking level, it indicates that the value of the interaction information corresponding to the first ranking level is higher than the value of the interaction information corresponding to the second ranking level.

The display modes the respective identifications of the plurality of users in the layout are updated based on the interaction information of the plurality of users in the interaction event, so that the identification(s) of the at least one user among the plurality of users is/are highlighted relative to identifications of other users among the plurality of users.

In some embodiments, the display mode of the user identification in the layout may be determined based on the interaction information (for example, the value of the interaction information) of each user in the interaction event. For example, after the interaction information of the user meets a predetermined condition, the display mode of the identification of the user may be updated to the display mode (for example, the display position and/or the display size) corresponding to the predetermined condition. For example, if a value of the interaction information of a user reaches a first threshold, the identification of the user may be presented in a first display mode (for example, a specific display position and/or display size). If a value of the interaction information of a user reaches a second threshold, the identification of the user may be presented in a second display mode (for example, a display position and/or display size different from that of the first display mode). In this way, the display mode of a user may be dynamically updated depending on the interaction information of the user during the interaction event.

In some embodiments, the display modes of the respective identifications of the plurality of users in the layout may be updated based on the ranking of the interaction information of the plurality of users in the interaction event, so that the identification(s) of the at least one user among the plurality of users is/are highlighted relative to identifications of other users among the plurality of users. In order to highlight the identification(s) of the one or more users with higher ranking levels, at least one of the display positions and the display styles of the respective identifications of the plurality of users in the layout may be updated to distinguish the display sizes and/or display positions of the identifications of the one or more users with higher ranking levels.

In some embodiments, the display size(s) of the identification(s) of at least one user with a higher ranking level is/are larger, so as to highlight the identification(s) of the at least one user with the higher ranking level. FIG. 2B illustrates an example 202 of a layout after user identification(s) being updated according to the interaction information. In the example of FIG. 2B, the display sizes of the identifications 212, 214, and 216 of the three users with the top three ranking levels are larger than the display sizes of the identifications of the users with the fourth ranking level.

In some embodiments, different ranking levels of the interaction information may have corresponding display sizes. For a user whose interaction information is at a certain ranking level, the identification of the user may be displayed in a display size corresponding to the ranking level.

In some embodiments, the display sizes of the identifications of the second predetermined number of users with the highest ranking levels are determined based on the ranking of the interaction information of the second predetermined number of users in the interaction event. Other numbers of display sizes other than the second predetermined number of users among the plurality of users are consistent and smaller than the display sizes of the identifications of the second predetermined number of users with the highest ranking level. That is, the display sizes of the user identifications may have a gradient of the second predetermined number plus one. The display sizes of the identifications of the second predetermined number of users have gradient differences, and the display sizes of the identifications of the remaining users are within the same gradient and are consistent. For example, in the example of FIG. 2B, the identifications of the top three users with the highest ranking level are determined according to the ranking of the respective interaction information, where the display size of the identification 212 with the highest ranking level is the largest, the display size of the identification 214 with the second-highest ranking level is smaller than the display size of the identification 212 with the highest ranking level, and the display size of the identification 216 of the third-highest ranking level is smaller than the display size of the identification 214 of with the second-highest ranking level. The display sizes of the user identifications 230 with the fourth ranking level are the same and are smaller than the display size of the identification 216 with the third-highest ranking level.

In the example of FIG. 2B, the user identifications have display sizes of 4 ranking levels. Of course, more or fewer ranking levels of display sizes may be set in addition to the example of FIG. 2B.

In some embodiments, after the ranking result is determined, the identifications of the second predetermined number of users with the highest ranking level may be correspondingly enlarged to the display sizes corresponding to the rankings, while the display sizes of the identifications of other users may remain unchanged (e.g., remain the same size as the initial stage). Of course, the display sizes of the user identifications may also be scaled in other ways to distinguish them in terms of display size.

In some embodiments, alternatively or additionally, based on the interaction information of the plurality of users in the interaction event, in addition to updating the display size of the identification of the user, the display position of the identification of the user may be updated. Specifically, if the layout includes the layout of the annulus and the circle center, the identification(s) of the at least one user with the highest ranking level of the interaction information among the plurality of users is/are presented at the position of the circle center to display the identification(s) of the user(s) in a centered manner. In addition, the identifications of other users among the plurality of users except the at least one user with the highest ranking level remain distributed on the annulus. For example, in FIG. 2B, the identification of the user with the highest ranking level not only has the largest display size but also is displayed at the position of the circle center. In this way, the user with the highest ranking level of the interaction information in the interaction event may be highlighted. In some embodiments, the identification(s) of the at least one user with the highest ranking level may be moved from the position on the annulus to the position of the circle center, and the identifications of other users on the annulus may be re-organized to be evenly distributed on the annulus. For example, on the annulus, the distance between the circle centers of the identifications of the adjacent users may be equal, or the angle between the circle center of the identification of each adjacent user and the circle center of the annulus may be equal.

It to be understood that although only the identification of the single user is shown in the position of the circle center in the example of FIG. 2B, in other examples, the identifications of two or more users with the highest ranking level may be placed together at the position of the circle center, which is not limited in the embodiments of the present disclosure.

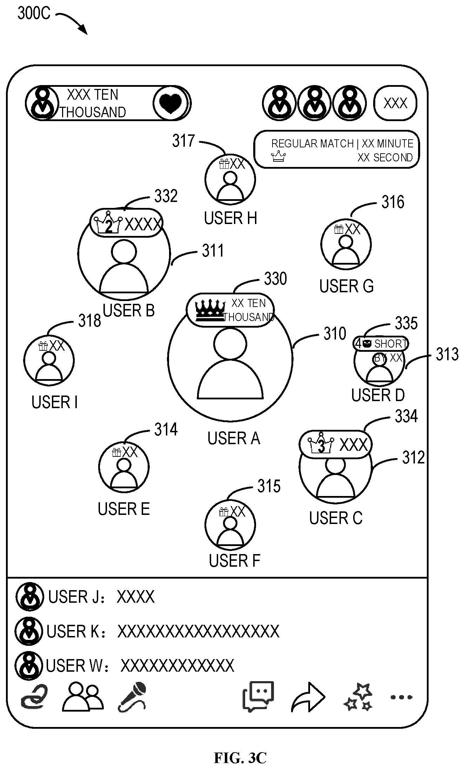

FIG. 3C illustrates a live stream interface 300C updated based on interaction information according to some embodiments of the present disclosure. Assuming that user A has the highest ranking level of the interaction information in the interaction event, the identification 310 of the user A is moved from the annulus to the position of the circle center to be displayed in the centered manner. In addition, the identification 310 of the user A may also be enlarged to highlight the user A with the highest ranking level. In addition, the identifications of the users ranked second and below remain displayed on the annulus, but the identification 311 of the user B (ranked second) and the identification 312 of the user C (ranked third) are both enlarged to the display sizes corresponding to the respective ranking levels.

In some embodiments, in addition to highlighting the user with the higher ranking level in the display size and/or the display position, corresponding additional visual elements are respectively superimposed and displayed on the identification(s) of at least one user among the plurality of users.

In the case that the ranking is performed based on the interaction information, in some embodiments, the corresponding additional visual elements may also be superimposed and displayed on the identification(s) of the at least one user with the highest ranking level among the plurality of users, and each additional visual element indicates the ranking level. As shown in FIG. 3B, a visual element 330 is superimposed on the identification 310 of the user A, a visual element 332 is superimposed on the identification 311 of the user B, and a visual element 334 is superimposed on the identification 312 of the user C. The visual elements 330, 332, and 334 indicate corresponding ranking levels, respectively.

In some embodiments, alternatively or additionally, the corresponding additional visual elements may also be superimposed and displayed on the identification(s) of at least one with the lowest ranking among the plurality of users, and each additional visual element indicates a ranking level of the corresponding user. For example, in FIG. 3B, a visual element 335 is superimposed on the identification 313 of the user D that is ranked last to indicate the corresponding ranking level.

In some embodiments, in addition to distinguishing the ranking of the users by positions at the circle center and on the annulus, for users located on the annulus, the distances between the user identifications on the annulus and the position of the circle center may also be determined according to the ranking status. As shown earlier, the identification(s) of the at least one user with the highest ranking level may be presented at the position of the circle center, so that the distances between the positions of the identifications of the other users (other than the at least one user with the highest ranking level) on the annulus and the position of the circle center may be determined based on the ranking of the interaction information of the users on the annulus in the interaction event. In some embodiments, for users on the annulus, the identification of the user with a higher ranking level may be closer to the position of the circle center. In this way, different rankings may be distinguished by the distances from the circle center.

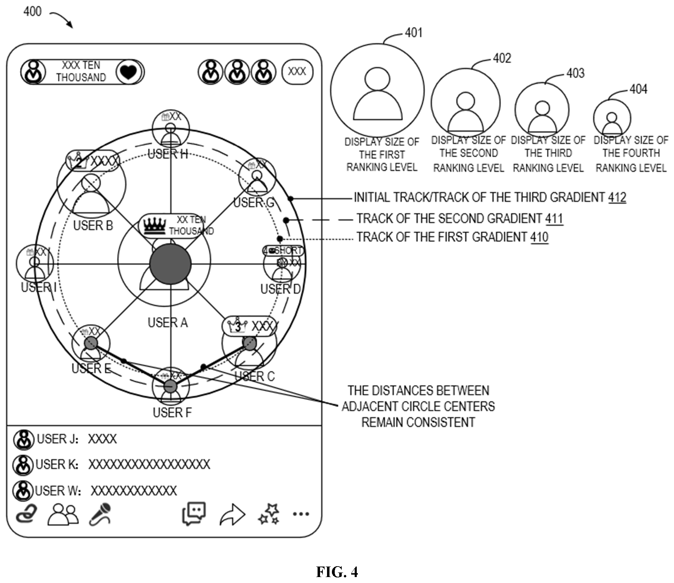

To more clearly show the distance difference between the identifications of users on the annulus and at the circle center, FIG. 4 is a schematic diagram of an example 400 of a user identification layout in a live stream interface according to some embodiments of the present disclosure. In the example of FIG. 4, according to the ranking of the interaction information of the user in the interaction event, the user identifications have 4 gradient display sizes 401, 402, 403 and 404. In addition, for users on the annulus, the distances between the identifications and the circle center are further divided into three gradients, corresponding to the tracks 410, 411 and 412, respectively. The track 410 of the first gradient is closest to the circle center, the distance between the track 411 of the second gradient and the circle center is greater than the distance between the track 410 and the circle center, and the distance between the track 412 of the third gradient and the circle center is greater than the distance between the track 411 and the circle center. The identifications of the users with the highest ranking level among the users on the annulus may be distributed on the track 410 (for example, the circle centers of the identifications of the users located on the track 410), the identifications (for example, the circle centers of the identifications) of the users with the second-highest ranking level may be distributed on the track 411, and the identifications (for example, the circle centers of the identifications) of the users with the lowest ranking level of interaction information may be distributed on the track 412. In some embodiments, at the initial stage of the interaction event, the circle centers of the identifications of all users may be located on the track 412, and with the generation of the ranking, the identifications (for example, the circle centers of the identifications) of the users with higher ranking levels gradually move to the tracks 411 or 412. In addition, on the annulus, the distances between the circle centers of the identifications of adjacent users remain consistent.

It should be understood that in addition to the three gradient distances from the circle center shown in FIG. 4, more or fewer distance gradients may be set according to the needs of practical applications.

In some embodiments, as the interaction event proceeds, the interaction information of the plurality of users in the interaction event may change. For example, the interaction event may include a plurality of rounds of interaction, with a ranking result generated in each round, or the ranking may be updated according to a predetermined time interval during the interaction event. As the ranking changes, the display modes of the plurality of users in the layout will continue to be updated based on the changed ranking results, including updating the display styles, display positions, etc. of the users based on the ranking as the embodiments discussed above.

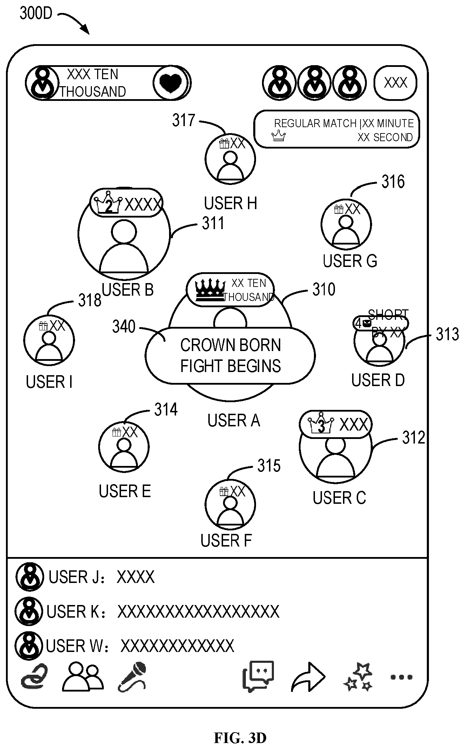

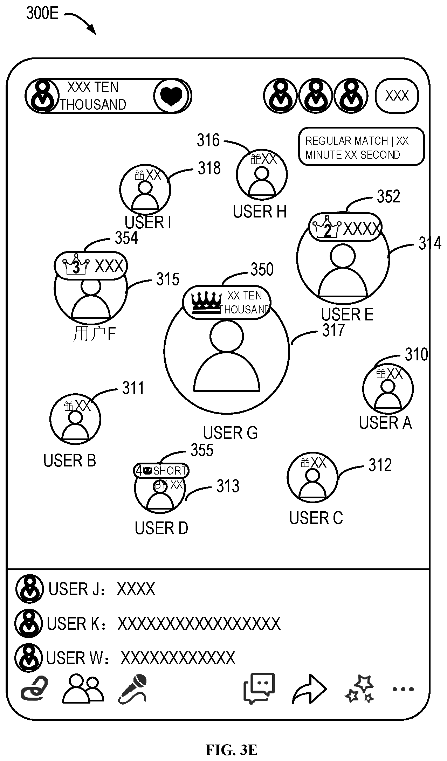

As shown in FIG. 3D, when the next round of interaction event starts, an indication 340 is presented in the live stream interface 300D. As shown in FIG. 3E, as the interaction event continues, the interaction information of the plurality of users in the interaction event may change. At this time, the ranking level of the interaction information of the user G is the highest, so the identification 317 of the user G has the largest display size and is presented at the position of the circle center. User E ranks second, so the identification 314 of the user E has the second-largest display size and is presented at a certain position on the annulus. User F ranks third, so the identification 315 of the user F has the third-largest display size and is presented at a certain position on the annulus. The identifications of the remaining users are also located on the annulus, with the same display size and smaller than the display size of the identification 315. In addition, the identifications of the top three users (the user G, user E, and user F) with the highest ranking level of interaction information are respectively superimposed with visual elements 350, 352, and 354 and the identification 313 of the user D with the lowest ranking of interaction information is superimposed with a visual element 355 to indicate the corresponding rankings respectively.

In some embodiments, when updating the display mode of the user, an animation effect may also be used to show the change of the display mode. In some embodiments, assuming that the identification of the first user among the plurality of users is presented at the position of the circle center and the identification of the second user among the plurality of users is presented at a position on the annulus, if it is determined, based on the ranking, that the second user among the plurality of users ranks before the first user, the animation effect may be presented on the live stream interface to indicate that the identification of the second user moves from the position on the annulus to the position of the circle center and replaces the identification of the first user. In some embodiments, since the ranking level is higher, not only does the presenting position of the identification of the second user change, but the display size is also enlarged, so the animation effect may also indicate that the identification of the second user is enlarged and then moves to the position of the circle center. In some embodiments, the animation effect also indicates that the identification of the first user is reduced and moves to another position on the annulus. In an example, the animation effect may indicate that the identification of the second user with the highest current ranking level is enlarged, moves and knocks away the identification of the first user originally located at the circle center. Then, the identification of the first user originally located at the circle center becomes smaller, moves along the direction that the identification of the first user is knocked and is inserted between the two user identifications on the annulus. Subsequently, the identifications of all users on the annulus are re-organized to achieve a uniform distribution.

In the above embodiments, the embodiments of the present disclosure are described by taking the layout of the annulus and the circle center as an example. In addition to the layout of the annulus and the circle center, the identifications of the users participating in the interaction event may be laid out according to other geometric shapes, as long as the display modes of the user identifications can be dynamically updated as the interaction event proceeds as in the embodiments discussed above.

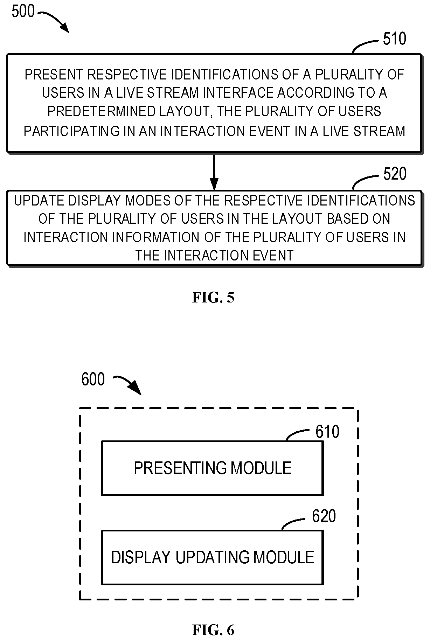

FIG. 5 shows a flowchart of a process 500 for live streaming interaction according to some embodiments of the present disclosure. Process 500 may be implemented at a terminal device, such as the terminal device 120.

At block 510, the terminal device 120 presents respective identifications of a plurality of users in a live stream interface according to a predetermined layout. The plurality of users participates in an interaction event in a live stream.

At block 520, the terminal device 120 updates display modes of the respective identifications of the plurality of users in the layout based on interaction information of the plurality of users in the interaction event. An identification of at least one user among the plurality of users is highlighted relative to identifications of other users among the plurality of users.

In some embodiments, updating the display modes of the respective identifications of the plurality of users in the layout includes: updating the display modes of the respective identifications of the plurality of users in the layout based on ranking of the interaction information of the plurality of users in the interaction event, where an identification of at least one user at a first ranking level among the plurality of users is highlighted relative to an identification of at least one user at a second ranking level, and the first ranking level is higher than the second ranking level.

In some embodiments, in the initial stage of the interaction event, the respective identifications of the plurality of users are the same in the layout.

In some embodiments, the layout at least includes an annular layout, and in the initial stage of the interaction event, the respective identifications of the plurality of users are distributed along an annulus.

In some embodiments, the annulus includes a first predetermined number of positions for presenting identifications, and if the number of the plurality of users is less than the first predetermined number, a predetermined identification is prensented at a position on the annulus at which no identification is presented during the interaction event.

In some embodiments, updating the display modes of the respective identifications of the plurality of users in the layout includes: updating at least one of the display positions and the display styles of the respective identifications of the plurality of users in the layout based on the interaction information of the plurality of users in the interaction event.

In some embodiments, the display style at least includes a display size, and the display size of the identification(s) of at least one user at the first ranking level is larger than the display size of the identification(s) of at least one user at the second ranking level.

In some embodiments, the display sizes of the identifications of the second predetermined number of users with the highest ranking level are determined based on the ranking of the interaction information of the second predetermined number of users in the interaction event. In some embodiments, other numbers of display sizes other than the second predetermined number of users among the plurality of users are consistent and smaller than display sizes of the identifications of the second predetermined number of users with the highest ranking level.

In some embodiments, the layout includes a layout of an annulus and a circle center, the identification of at least one user with the highest ranking level among the plurality of users is presented at a position of the circle center, and the identifications of other users among the plurality of users other than the at least one user with the highest ranking level are distributed on the annulus.

In some embodiments, the distances between the positions of the identifications of other users among the plurality of users (except the at least one user with the highest ranking level) on the annulus and the position of the circle center are determined based on the ranking of the interaction information of the other users in the interaction event.

In some embodiments, the identification of a first user among the plurality of users is presented at the position of the circle center and the identification of a second user among the plurality of users is presented at a position on the annulus, and the process 500 further includes: if it is determined that the second user among the plurality of users is to replace the first user to be presented at the position of the circle center, presenting an animation effect on the live stream interface. The animation effect indicates that the identification of the second user moves from the position on the annulus to the position of the circle center and replaces the identification of the first user.

In some embodiments, the animation effect further indicates that the identification of the second user moves to the position of the circle center after being enlarged.

In some embodiments, the animation effect further indicates that the identification of the first user moves to a further position of the annulus after being reduced in size.

In some embodiments, corresponding additional visual elements are respectively superimposed and displayed on the identification of the at least one user among the plurality of users.

In some embodiments, the identification of the user at least includes an avatar of the user.

FIG. 6 illustrates a schematic structural block diagram of an apparatus 600 for live streaming interaction according to some embodiments of the present disclosure. The apparatus 600 may be implemented as or included in a terminal device (for example, the terminal device 120 and/or the terminal device 120). Each module/component in the apparatus 600 may be implemented by hardware, software, firmware, or any combination thereof.

The apparatus 600 includes a presenting module 610 configured to present respective identifications of a plurality of users in a live stream interface according to a predetermined layout, where the plurality of users participate in an interaction event in the live stream. The apparatus 600 further includes a display updating module 620 configured to update display modes of the respective identifications of the plurality of users in the layout based on the interaction information of the plurality of users in the interaction event, wherein an identification of at least one of the plurality of users is highlighted relative to identifications of other users among the plurality of users.

In some embodiments, in the initial stage of the interaction event, respective identifications of the plurality of users are the same in the layout.

In some embodiments, the layout at least includes an annular layout, and in the initial phase of the interaction event, the respective identifications of the plurality of users are distributed along an annulus.

In some embodiments, the annulus includes a first predetermined number of positions for presenting identifications, and if the number of the plurality of users is less than the first predetermined number, a predetermined identification is prensented at a position on the annulus at which no identification is presented during the interaction event.

In some embodiments, the display updating module 620 is configured to update at least one of the display positions and the display styles of the respective identifications of the plurality of users in the layout based on the interaction information of the plurality of users in the interaction event.

In some embodiments, the display style at least includes a display size, and the display size of the identification(s) of at least one user at the first ranking level is larger than the display size of the identification(s) of at least one user at the second ranking level.

In some embodiments, the display sizes of the identifications of the second predetermined number of users with the highest ranking level is determined based on the ranking of the interaction information of the second predetermined number of users in the interaction event. In some embodiments, other numbers of display sizes other than the second predetermined number of users in the plurality of users are consistent and smaller than display sizes of the identifications of the second predetermined number of users with the highest ranking level.

In some embodiments, the layout includes a layout of an annulus and a circle center, the identification of at least one user with the highest ranking level among the plurality of users is presented at a position of the circle center, and identifications of other users among the plurality of users other than the at least one user with the highest ranking level are distributed on the annulus.

In some embodiments, the distances between the positions of the identifications of the other users among the plurality of users (except the at least one user with the highest ranking level) on the annulus and the position of the circle center are determined based on the ranking of the interaction information of the other users in the interaction event.

In some embodiments, the identification of a first user among the plurality of users is presented at the position of the circle center and the identification of a second user among the plurality of users is presented at a position on the annulus. The apparatus 600 further includes an animation presenting module configured to: if it is determined that the second user among the plurality of users is to replace the first user to be presented at the position of the circle center, present an animation effect on the live stream interface, where the animation effect indicates that the identification of the second user moves from the position on the annulus to the position of the circle center and replaces the identification of the first user.

In some embodiments, the animation effect further indicates that the identification of the second user moves to the position of the circle center after being enlarged.

In some embodiments, the animation effect also indicates that the identification of the first user moves to a further position of the annulus after being reduced in size.

In some embodiments, corresponding additional visual elements are respectively superimposed and displayed on the identification of the at least one user among the plurality of users.

In some embodiments, the identification of the user at least includes an avatar of the user.

The modules and/or units included in the apparatus 600 may be implemented in various ways, including software, hardware, firmware, or any combination thereof. In some embodiments, one or more modules and/or units may be implemented using software and/or firmware, such as machine-executable instructions stored on a storage medium. In addition to or as an alternative to machine-executable instructions, some or all of the modules and/or units in the apparatus 600 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

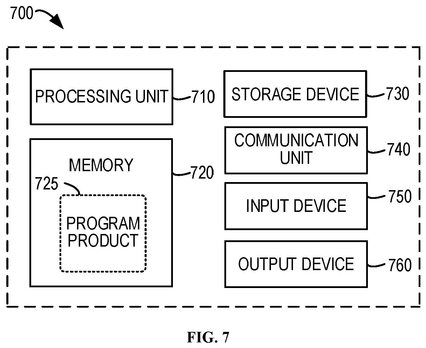

FIG. 7 shows a block diagram of an electronic device 700 in which one or more embodiments of the present disclosure may be implemented. It should be understood that the electronic device 700 illustrated in FIG. 7 is merely illustrative and should not constitute any limitation on the functions and scope of the embodiments described herein. The terminal device 110 of FIG. 1 or the apparatus 600 of FIG. 6 may be implemented as or included in one or more electronic devices 700.

As shown in FIG. 7, the electronic device 700 is in the form of a general-purpose computing device. Components of the electronic device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In multiprocessor systems, multiple processing units execute computer-executable instructions in parallel to improve parallel processing capabilities of electronic device 700.

The electronic device 700 typically includes a plurality of computer storage media. Such media may be any available media accessible to the electronic device 700, including, but not limited to, volatile and non-volatile media, removable and non-removable media. The memory 720 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 730 may be a removable or non-removable medium and may include a machine-readable medium, such as a flash drive, magnetic disk, or any other medium, which may be capable of storing information and/or data (e.g., training data for training) and may be accessed within electronic device 700.

The electronic device 700 may further include additional removable/non-removable, volatile/non-volatile storage media. Although not shown in FIG. 7, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 720 may include a computer program product 725 having one or more program modules configured to perform various methods or actions of various embodiments of the present disclosure.

The communication unit 740 enables communication with other electronic devices through a communication medium. Additionally, the functions of the components of the electronic device 700 may be implemented in a single computing cluster or multiple computing machines capable of communicating over a communication connection. Thus, the electronic device 700 may operate in a networked environment using logical connections with one or more other servers, network personal computers (PCs), or another network node.

The input device 750 may be one or more input devices, such as a mouse, a keyboard, a trackball, or the like. The output device 760 may be one or more output devices, such as a display, a speaker, a printer, or the like. The electronic device 700 may also communicate with one or more external devices (not shown) through the communication unit 740 as needed, external devices such as storage devices, display devices, etc. , communicate with one or more devices that enable a user to interact with the electronic device 700, or communicate with any device (e.g., a network card, a modem, etc. ) that enables the electronic device 700 to communicate with one or more other electronic devices. Such communication may be performed via an input/output (I/O) interface (not shown).

According to example implementations of the present disclosure, a computer-readable storage medium is provided, on which computer-executable instructions are stored, where the computer-executable instructions are executed by a processor to implement the method described above. According to example implementations of the present disclosure, a computer program product is further provided, the computer program product being tangibly stored on a non-transitory computer-readable medium and including computer-executable instructions, and the computer-executable instructions are executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that when these instructions are executed by the processing unit of the computer or other programmable data processing apparatuses, an apparatus for implementing the functions/actions specified in one or more blocks of the flowcharts and/or block diagrams is generated. These computer-readable program instructions may also be stored in a computer-readable storage medium, and these instructions cause the computer, programmable data processing apparatus, and/or other devices to work in a particular manner, such that the computer-readable medium storing instructions includes an article of manufacture including instructions to implement aspects of the functions/acts specified in one or more blocks of the flowcharts and/or block diagrams.

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatuses, or other devices implement the functions/acts specified in one or more blocks of the flowcharts and/or block diagrams.

The flowcharts and block diagrams in the drawings show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the drawings. For example, two consecutive blocks may actually be performed substantially in parallel, which may sometimes be performed in the reverse order, depending on the functions involved. It should be also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming interaction, comprising:
presenting respective identifications of a plurality of users in a live stream interface according to a predetermined layout, the plurality of users participating in an interaction event in a live stream; and
updating display modes of the respective identifications of the plurality of users in the layout based on interaction information of the plurality of users in the interaction event, an identification of at least one user among the plurality of users being highlighted relative to identifications of other users among the plurality of users.

2. The method of claim 1, wherein updating the display modes of the respective identifications of the plurality of users in the layout comprises:
updating the display modes of the respective identifications of the plurality of users in the layout based on ranking of the interaction information of the plurality of users in the interaction event, and
wherein an identification of at least one user at a first ranking level among the plurality of users is highlighted relative to an identification of at least one user at a second ranking level, and the first ranking level is higher than the second ranking level.

3. The method of claim 1, wherein the layout at least comprises an annular layout, and in an initial stage of the interaction event, the respective identifications of the plurality of users are distributed along an annulus.

4. The method of claim 3, wherein the annulus comprises a first predetermined number of positions for presenting identifications, and in a case that a number of the plurality of users is less than the first predetermined number, a predetermined identification is prensented at a position on the annulus at which no identification is presented during the interaction event.

5. The method of claim 1, wherein updating the display modes of the respective identiftications of the plurality of users in the layout comprises:
updating at least one of display positions and display styles of the respective identifictaions of the plurality of users in the layout based on the interaction information of the plurality of users in the interaction event.

6. The method of claim 5, wherein the display styles at least comprise display sizes, and a display size of an identification of at least one user among the plurality of users is larger than display sizes of identifications of other users among the plurality of users.

7. The method of claim 2, wherein the layout comprises a layout of an annulus and a circle center, an identification of at least one user with a highest ranking level among the plurality of users is presented at a position of the circle center, and identifications of other users among the plurality of users except the at least one user with the highest ranking level are distributed along the annulus.

8. The method of claim 7, wherein distances between positions of the identifications of the other users among the plurality of users except the at least one user with the highest ranking level on the annulus and the position of the circle center are determined based on rankings of the interaction information of the other users in the interaction event.

9. The method of claim 7, wherein an identification of a first user among the plurality of users is presented at the position of the circle center and an identification of a second user among the plurality of users is presented at a position on the annulus, and the method further comprises:
in accordance with a determination that the second user among the plurality of users is to replace the first user to be presented at the position of the circle center, presenting an animation effect on the live stream interface, the animation effect indicating that the identification of the second user moves from the position on the annulus to the position of the circle center and replaces the identification of the first user.

10. The method of claim 9, wherein the animation effect further indicates that the identification of the second user moves to the position of the circle center after being enlarged.

11. The method of claim 9, wherein the animation effect further indicates that the identification of the first user moves to a further position of the annulus after being reduced in size.

12. The method of claim 1, wherein corresponding additional visual elements are respectively superimposed and displayed on the identification of the at least one user among the plurality of users.

13. The method of claim 1, wherein an identification of a user at least comprises an avatar of the user.

14. An apparatus for live streaming interaction, comprising:
a presenting module configured to present respective identifications of a plurality of users in a live stream interface according to a predetermined layout, the plurality of users participating in an interaction event in a live stream; and
a display updating module configured to update display modes of the respective identifications of the plurality of users in the layout based on interaction information of the plurality of users in the interaction event, an identification of at least one user among the plurality of users being highlighted relative to identifications of other users among the plurality of users.

15. An electronic device, comprising:
at least one processing unit; and
at least one memory coupled to the at least one processing unit and storing instructions executed by the at least one processing unit, the instructions, when executed by the at least one processing unit, causing the device to perform the method of any of claims 1 to 13.

16. A computer-readable storage medium having stored thereon a computer program, the computer program, when executed by a processor, implementing the method of any of claims 1 to 13.
